# EUROPEAN PATENT APPLICATION

(11) **EP 3 466 682 A1**
(43) Date of publication of application: **10.04.2019**
(21) Application number: 17802937.7
(22) Date of filing: 26.05.2017
(51) Int. Cl.: B32B 27/18, B32B 7/02, B32B 27/32, C01B 32/205, H01B 1/04, H01B 5/02, H01M 8/0202

(54) **COMPOSITE AND METHOD FOR MANUFACTURING COMPOSITE**

(30) Priority: 26.05.2016 JP 2016105058
(71) Applicant: Toyo Tanso Co., Ltd., Osaka-shi, Osaka 555-0011 (JP)
(72) Inventor: HOSOKAWA, Toshihiro, Mitoyo-shi Kagawa 769-1102 (JP); MISAKI, Nobuya, Mitoyo-shi Kagawa 769-1102 (JP); KURIHARA, Kenta, Mitoyo-shi Kagawa 769-1102 (JP)
(74) Representative: Studio Torta S.p.A.
(86) International application number: PCT/JP2017/019796
(87) International publication number: WO 2017/204351

(57) **Abstract**

Entrance of liquid is sufficiently prevented while electrical conductivity of a carbon material is maintained. A composite 1 includes a substrate 2 and a conductive layer 3 formed on the substrate 2. The substrate 2 includes: a carbon material including a carbon component; and hydrophobic resin.

## Description

### [Technical Field]

The present invention relates to a composite in which a conductive layer is formed on a substrate including a carbon component and resin, and relates to a method for manufacturing the composite.

### [Background Art]

Carbon materials such as graphite sheets are used for various purposes such as separators of fuel cells and electrodes of air cleaners, on account of electrical conductivity and excellent gas impermeability. However, because the gas impermeability is insufficient with only a graphite sheet, the gas impermeability is improved by forming a conductive resin layer on the graphite sheet (see Patent Literature 1).

### [Citation List]

### [Patent Literatures]

[Patent Literature 1] WO2015/008867

### [Summary of Invention]

### [Technical Problem]

However, even if the conductive resin layer is formed, the graphite sheet swells upon exposure to liquid. As a result, the performances as a separator, an electrode, etc. are deteriorated.

An object of the present invention is to provide a composite which sufficiently prevents entrance of liquid while maintaining the electrical conductivity of a carbon material, and a method for manufacturing the composite.

### [Solution to Problem]

In a composite of the present application, a conductive layer is formed on a substrate which includes: a carbon material including a carbon component; and hydrophobic resin. In the subject application, the hydrophobic resin is resin which does not include hydroxy groups (-OH), amino groups (-NH₂), and carboxyl groups (-COOH) which are hydrophilic groups. The conductive layer is a layer including a conductive material.

Because the hydrophobic resin excels in water repellence, the substrate is water repellent when the substrate includes the hydrophobic resin. It is therefore possible to sufficiently prevent liquid from entering the composite, because liquid is unlikely to enter the substrate. Furthermore, because the substrate includes a carbon material and the conductive layer is formed, decrease in electrical conductivity due to the presence of hydrophobic resin is prevented.

It is therefore possible to sufficiently prevent entrance of liquid while maintaining the electrical conductivity of the carbon material.

Preferably, the hydrophobic resin is evenly spread in the substrate. Because the hydrophobic resin is evenly spread in the substrate, the entire substrate has water repellence, and hence the effect of preventing the entrance of liquid is improved.

Preferably, the carbon material is expanded graphite. The expanded graphite excels in moldability and processability in comparison with other carbon materials.

The hydrophobic resin is preferably hydrophobic resin with thermoplasticity. In this application, when having thermoplasticity, a material is softened when heated to a suitable temperature and obtains plasticity, and is solidified when cooled. Because the resin is molten on account of the thermoplasticity, the molten resin can be mixed with the carbon material at the time of manufacturing the substrate, and is easily spread in the entire substrate evenly.

The above-described hydrophobic resin with thermoplasticity is preferably polyolefin resin. Polyolefin resin can be quite evenly spread in the substrate because it typically has high fluidity after being heated.

The above-described polyolefin resin is preferably polypropylene. Polypropylene is easily spread in the substrate evenly because the viscosity when it is molten is advantageously low. This improves the effect of preventing the entrance of liquid.

In the arrangement above, preferably, the carbon material is expanded graphite and the substrate includes 3 parts by weight or more and most 25 parts by weight or less of the hydrophobic resin relative to 100 parts by weight of the expanded graphite.

A method for manufacturing a composite of the present invention is arranged such that a conductive layer is formed on a substrate which includes : a carbon material including a carbon component; and hydrophobic resin, the method comprising the step of forming the conductive layer on the substrate which is formed by thermally treating a molding formed by molding a mixture which includes: the carbon material including the carbon component; and the hydrophobic resin. According to this method, as the mixture of the carbon material and the hydrophobic resin is thermally treated, the hydrophobic resin with water repellence is evenly spread in the substrate. With this, because every part of the substrate is water repellent, entrance of liquid is sufficiently prevented. Furthermore, because the substrate includes the carbon material and the conductive layer is formed, decrease in electrical conductivity due to the presence of hydrophobic resin is prevented. This makes it possible to provide a composite which sufficiently prevents entrance of liquid while maintaining the electrical conductivity of a carbon material.

### [Advantageous Effects of Invention]

The present invention makes it possible to provide a composite which sufficiently prevents entrance of liquid while maintaining the electrical conductivity of a carbon material.

### [Brief Description of Drawings]

[FIG. 1] FIG. 1 is a cross section of a composite of an embodiment of the present invention.
[FIG. 2] FIG. 2 is a flow chart of a method for manufacturing the composite.
[FIG. 3] FIG. 3 shows an experiment result (a change over time of the mass change rate of the composite).
[FIG. 4] FIG. 4 shows an experiment result (the relationship between an applied amount and the surface resistivity of the composite).
[FIG. 5] FIG. 5 shows an experiment result (the relationship between an applied amount and the surface resistivity of the composite).

### [Description of Embodiments]

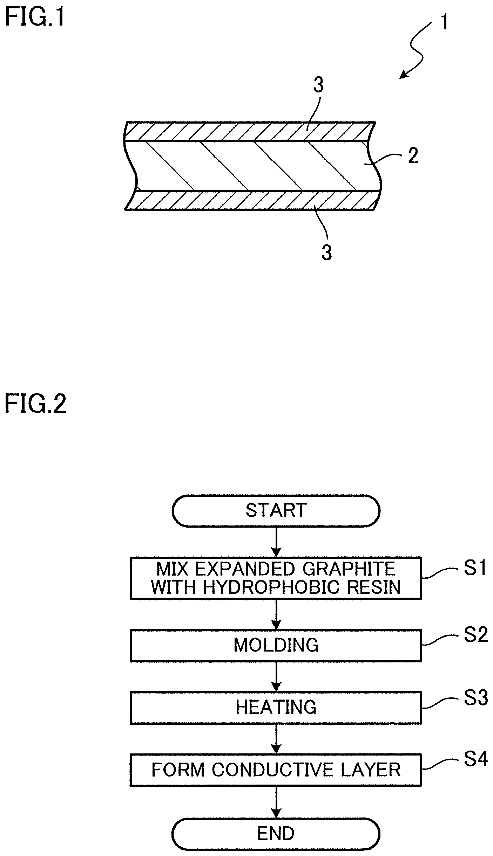

The following will describe a preferred embodiment of the present invention with reference to figures. A composite and a method of manufacturing therefor according to the embodiment of the present invention will be described with reference to FIG. 1 and FIG. 2.

As shown in FIG. 1, a composite 1 includes a substrate 2 and conductive layers 3 formed on the top surface and the bottom surface of the substrate 2.

The substrate 2 includes: a carbon material including a carbon component; and hydrophobic resin. Examples of the carbon material including the carbon component include: expanded graphite; natural graphite; and graphite derived from polymer. Among these examples, expanded graphite excels in moldability and processability in comparison with other carbon materials.

Because the hydrophobic resin excels in water repellence, the substrate 2 is water repellent when the substrate 2 includes the hydrophobic resin. In the present embodiment, the hydrophobic resin is evenly spread in the surfaces and the inside of the substrate 2 (not illustrated) . On this account, the water contact angle of the surface of the substrate 2 is 90 degrees or larger, and hence water wettability is poor. For this reason, when the composite 1 is exposed to liquid, the liquid scarcely enters the substrate 2. Furthermore, when the water contact angle is 90 degrees or larger, corrosion, etc. is unlikely to occur in cases of exposure to an oxidizing solution (e.g., concentrated sulfuric acid or hydrogen peroxide), and hence resistance to oxidizing solution is obtained. Furthermore, because the hydrophobic resin is evenly spread, the carbon material is also evenly spread in the substrate 2, and hence good electrical conductivity of the carbon material is maintained.

The hydrophobic resin is preferably hydrophobic resin with thermoplasticity. With thermoplasticity, a material is softened by heat and obtains plasticity, and is solidified when cooled. Because the resin is molten at the time of manufacturing the substrate on account of the thermoplasticity, the molten resin can be mixed with the carbon material, and is easily spread in the entire substrate evenly.

Examples of the hydrophobic resin with thermoplasticity include polyolefin resin, saturated polyester resin, ABS resin, and fluororesin. Polyolefin resin can be quite evenly spread in the substrate because it typically has high fluidity after being heated. Examples of the polyolefin resin include polypropylene and polyethylene. Among them, polypropylene is easily spread in the substrate 2 evenly. Examples of the saturated polyester resin include polytrimethylene terephthalate (PTT) and polybutylene terephthalate (PBT). An example of the ABS resin is acrylic butadiene styrol (ABS). The fluororesin may be straight-chain fluororesin. Examples of the straight-chain fluororesin include polyvinylidene fluoride (PVDF) and polytetrafluoroethylene (PTFE).

When the substrate 2 includes expanded graphite and hydrophobic resin, the substrate 2 preferably includes 3 parts by weight or more of the hydrophobic resin, more preferably 5 parts by weight or more of the hydrophobic resin, relative to 100 parts by weight of the expanded graphite. When the content of the hydrophobic resin is less than 3 parts by weight, the water repellence and resistance to oxidizing solution of the substrate 2 on account of the inclusion of the hydrophobic resin may be insufficient. Preferably, 25 parts by weight or less of the hydrophobic resin, more preferably, 20 parts by weight or less of the hydrophobic resin are included, relative to 100 parts by weight of the expanded graphite. The substrate 2 is water-repellent and resistant to oxidizing solution on account of the inclusion of the hydrophobic resin, but the control of the density of the hydrophobic resin and the control of the spreading may be difficult when the content of the hydrophobic resin exceeds 25 parts by weight, and the substrate 2 may not be moldable.

The conductive layer 3 is a layer including at least one material with electrical conductivity, and includes, for example, carbon particles and binder (resin). Examples of the carbon particles include graphite powder, carbon fibers, carbon black, and a combination of these materials. Examples of the graphite powder include powder of natural graphite, artificial graphite, expanded graphite, kish graphite, etc. Apart from the carbon powder, metal powder may be used. Carbon nanotubes and carbon micro coils may not be suitable as the carbon particles of the present invention, because they tend to form aggregates and are expensive. On this account, preferably, the carbon particles do not include carbon nanotubes and carbon micro coils.

When carbon particles are used, the diameter of each carbon particle preferably falls within a range of 2 µm or more and 50 µm or less. When the diameter is too short, the carbon particles coagulate, and the electric conductivity of the conductive layer 3 may not be even between positions. Meanwhile, when the diameter is too long, the carbon particles may not be evenly spread.

When carbon particles are used, in the conductive layer 3, electric conductivity is easily achieved as the carbon particles make contact with one another. When the carbon particles are conducted, electricity is supplied to the graphite sheet, with the result that the surface resistivity of the composite 1 is lowered. The amount of the carbon particles is preferably equal to or larger than 50 mass% and equal to or less than 80 mass%.

Examples of the binder include rubber binder, vinyl binder, thermoplastic synthetic resin binder, and a combination of them.

The amount of the applied conductive layer (the amount of the conductive layer) 3 is preferably 0.0085g/cm² or less, and more preferably 0.008g/cm² or lower. When the amount of the applied conductive layer (the amount of the conductive layer) exceeds 0.0085g/cm², the surface resistivity of the composite 1 is high and hence the conductivity tends to be lowered. The amount of the applied conductive layer (the amount of the conductive layer) 3 is preferably 0.001g/cm² or larger, and more preferably 0.002g/cm² or larger. The entrance of liquid is unlikely to be prevented when the applied amount is less than 0.001g/cm². The applied amount is calculated by a mass difference (g) between the substrate 2 and the composite 1 / substrate area (cm²).

The following will describe a method for manufacturing the composite 1 with reference to FIG. 2. The method described below is a method for manufacturing the substrate 2 by using expanded graphite and hydrophobic resin.

To begin with, the expanded graphite is mixed with the hydrophobic resin (a mixing step in S1 in FIG. 2) . The expanded graphite may be, for example, powder or a sheet in shape. A catalytic material, binder, etc. may be added.

Subsequently, the mixture of the expanded graphite and the polypropylene is molded into a desired shape (e.g., a sheet) (a molding step in S2 in FIG. 2) . The resultant molded article is heated (a thermal treatment step in S3 in FIG. 2) so that the substrate 2 is formed. As the molded article is heated, the hydrophobic resin is molten and is evenly spread in the entire expanded graphite.

Subsequently, paint which will become the conductive layer 3 is applied to the substrate 2. The paint is, for example, a mixture of a solvent (diluent) such as xylene, toluene, and acetone is mixed with carbon particles and binder (resin). After the paint is applied, the paint is dried to evaporate the solvent. As a result, the conductive layer 3 is formed (a conductive layer forming step in S4 in FIG. 2), so that the composite 1 is obtained.

While the composition of the paint is not particularly limited, 10g to 30g of the carbon particles and the binder (resin) are preferably included in 90 to 150g of the solvent, in consideration of even distribution of the carbon particles and the binder. Examples of the paint include Varniphite UCC-2 (made by Nippon Graphite Industries, ltd.) and Varniphite #27 (made by Nippon Graphite Industries, ltd.).

The substrate 2 of the composite 1 obtained by the method above includes the hydrophobic resin having excellent water-repellence. Furthermore, the conductive layers 3 are formed on the substrate 2. It is therefore possible to sufficiently prevent liquid from entering the composite 1 even if the composite 1 is exposed to the liquid. Furthermore, corrosion is unlikely to occur in cases of exposure to oxidizing solution, and hence the composite 1 has resistance to oxidizing solution. Furthermore, because the substrate 2 includes at least one carbon material and the conductive layers 3 are formed thereon, decrease in electrical conductivity due to the presence of polyolefin resin is prevented. It is therefore possible to sufficiently prevent entrance of liquid while maintaining the electrical conductivity of the carbon material.

The composite 1 described above can be used for various members used in liquid. The composite 1 can be used for various members used in corrosive oxidizing solution. For example, the composite 1 can be used for various members which are required to have low electric resistance in liquid, such as a wet cell and a submerged sensor.

In a battery having electrodes (cathode and anode) and an electrolyte solution, when the electrodes are immersed in the electrolyte solution, permeation of the electrolyte solution to the electrodes can be prevented when the electrodes are formed of the composite 1. As such, deterioration of the electrodes is preventable. The composite 1 can be used for both an anode and a cathode.

As described above, in a battery having electrodes (cathode and anode) and an electrolyte solution, the electrolyte solution is unlikely to permeate the electrodes including the composite 1, and hence the electrodes are hardly deteriorated. Furthermore, in a battery having an anode and/or a cathode including the composite 1 and an electrolyte solution, the electrolyte solution is unlikely to permeate the anode and/or cathode including the composite 1, and hence the battery has a long life.

In addition to the above, in a submerged sensor including the composite 1 or a submerged sensor coated with the composite 1, entrance of liquid into the sensor is prevented, and hence a failure of the sensor is prevented. High sensor accuracy is therefore maintained even after the use of the submerged sensor in the liquid for a long time.

### [Examples]

### [EXPERIMENT 1]

### (Example 1)

To begin with, acid-treated graphite was obtained by immersing natural graphite with 0.01 mass% or lower ash content into an acid treatment solution in which 5 parts by weight of hydrogen peroxide as an oxidant were added to 100 parts by weight of concentrated sulfuric acid with the density of 98% for 30 minutes, and agitating the liquid to cause a reaction. Subsequently, after this acid-treated graphite was taken out from the acid treatment solution, the graphite was thoroughly washed by water so that pH of the graphite became close to 7, and was then dried.

Subsequently, the acid-treated graphite after the water wash was put in an electric furnace at a temperature of 1000°C for 30 minutes to conduct a superheating expansion process. In this way, expanded graphite with the granularity of 30 to 100 mesh was prepared.

10 parts by weight of polypropylene were mixed with 100 parts by weight of the expanded graphite. After the mixture was preliminarily molded, the mixture was further molded into a sheet and thermal treatment was conducted. As a result, the substrate was formed. The thermal treatment was conducted in such a way that a sheet-shaped molding was put into an electric furnace at 100°C, the temperature was increased to 180°C, and the temperature was maintained at 180°C for 10 minutes. The thickness of the substrate was 0.5 mm. Thereafter, paint in which graphite powder and rubber binder was mixed into a solvent (diluent) of xylene and toluene (i.e., Varniphite UCC-2 (made by Nippon Graphite Industries, ltd.)) was applied to the substrate, the substrate was dried by a drier at 100°C so that a conductive layer was formed by completely evaporating the solvent, with the result that the composite was obtained. The amount of the applied conductive layer (the amount of the conductive layer) was 0.001g/cm².

### (Example 2)

A composite was formed by a method identical with Example 1 except that the amount of the applied conductive layer (the amount of the conductive layer) was 0.003g/cm².

### (Example 3)

A composite was formed by a method identical with Example 1 except that the amount of the applied conductive layer (the amount of the conductive layer) was 0.007g/cm².

### (Example 4)

A composite was formed by a method identical with Example 1 except that the amount of the applied conductive layer (the amount of the conductive layer) was 0.012g/cm².

### (Comparative Example 1)

A substrate was formed without adding polypropylene to expanded graphite prepared in Example 1. The thickness of the substrate was 0.5 mm, and the bulk density was 2g/cm³. No paint was applied to the substrate.

### (Comparative Example 2)

Paint (Varniphite UCC-2 (made by Nippon Graphite Industries, ltd.)) was applied to the substrate formed in Comparative Example 1, the substrate was dried by a drier at 100°C so that a conductive layer was formed by completely evaporating the solvent, with the result that the composite was obtained. The amount of the applied conductive layer (the amount of the conductive layer) was 0.004g/cm².

### (Comparative Example 3)

A substrate was formed by a method similar to the method in Example 1. No paint was applied to the substrate in Comparative Example 3.

### [Experiment]

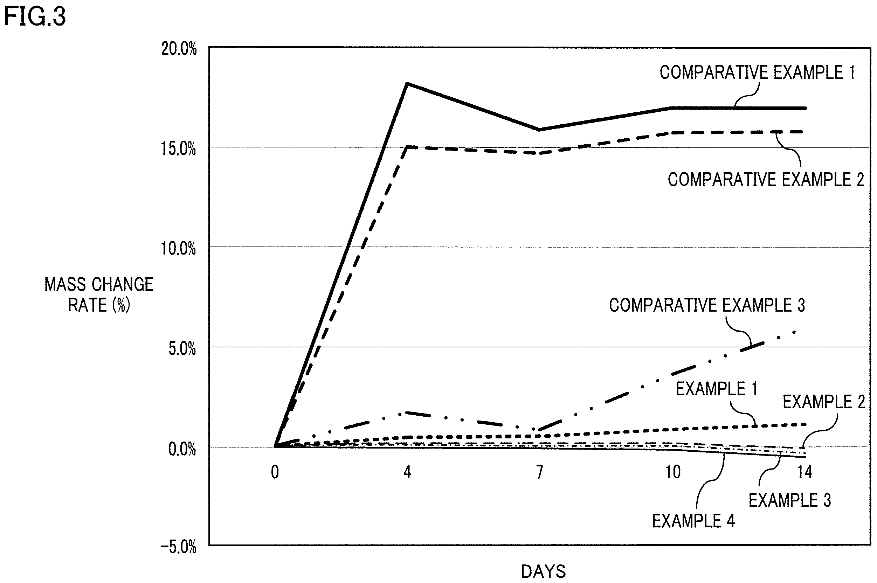

A test piece with the size of 30 mm x 30 mm was prepared from the composite or substrate each formed in Examples 1 to 4 and Comparative Examples 1 to 3, each test piece was immersed in an oxidizing solution (4.6M sulfuric acid and 0.42M hydrogen peroxide) at 70°C for two weeks, and the mass change rate was measured. FIG. 3 shows a change over time of the mass change rate.

From FIG. 3, it was found that the mass change rates in Examples 1 to 4 were close to 0%. It is considered that the oxidizing solution hardly enters the composite in Examples 1 to 4. Meanwhile, the mass change rates were high in Comparative Examples 1 to 3. In Comparative Examples 1 to 3, a strongly oxidizing solution entered the composite and the composite was expanded. In this way, while the entrance of the strongly oxidizing solution was prevented in Examples 1 to 4, the strongly oxidizing solution entered the substrate or the composite and the substrate or the composite was expanded in Comparative Examples 1 to 3.

In Comparative Example 1 and Comparative Example 2, the substrate did not include polyolefin resin. No conductive layer was formed in Comparative Example 1, whereas a conductive layer was formed in Comparative Example 2. However, the mass change rates of Comparative Example 1 and Comparative Example 2 were both high and more or less the same. The results indicate that the entrance of the strongly oxidizing solution cannot be sufficiently prevented by simply forming a conductive layer on the substrate.

In Comparative Example 3, the substrate included expanded graphite and polypropylene. While no conductive layer was formed in Comparative Example 3, the mass change rate was lower than those in Comparative Example 1 and Comparative Example 2 in which no polypropylene was included.

In this regard, the substrate in each of Examples 1 to 4 included polypropylene, but a conductive layer was formed in each of Examples 1 to 4. When a conductive layer was formed, the mass change rate was close to 0% even after two weeks from the start of the immersion, but the mass change rate after two weeks was high in Comparative Example 3 in which no conductive layer was formed. As such, there was a significant difference in mass change rate between Comparative Example 3 and Examples 1 to 4. It is considered that, in Comparative Example 3, the surface of the substrate was oxidized and embrittled by the oxidizing solution, and the oxidizing solution entered the inside through an embrittled part. Furthermore, the appearance was deteriorated due to the embrittlement of the surface of the substrate.

### [EXPERIMENT 2]

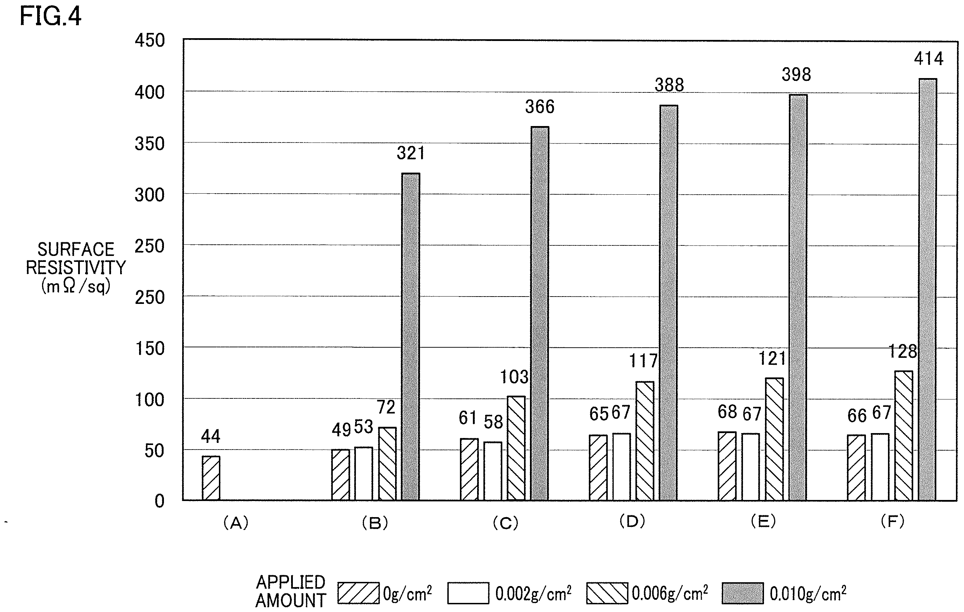

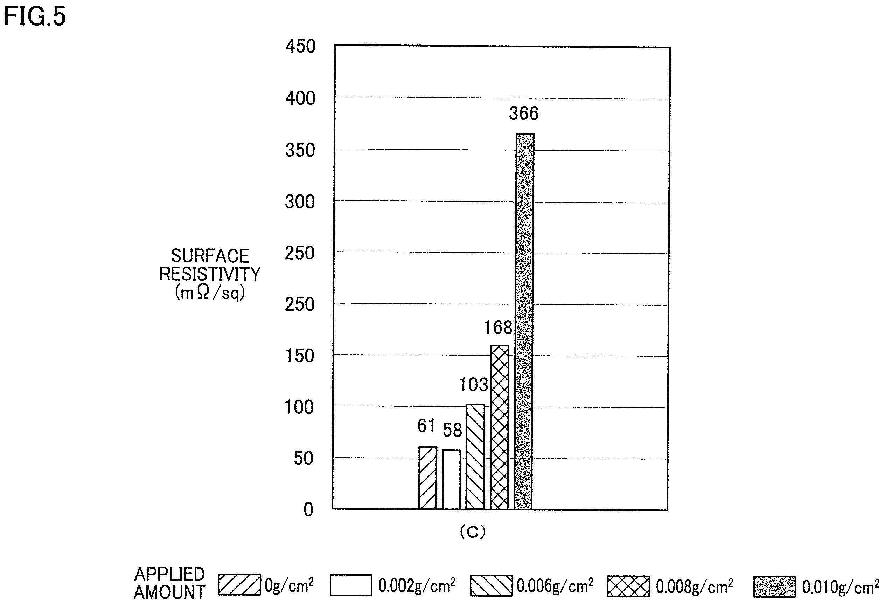

(A) A substrate was formed without adding polypropylene to expanded graphite prepared in Example 1. The thickness of the substrate was 0.5 mm, and the bulk density was 2g/cm³. No paint was applied to the substrate.
(B) A substrate was formed without adding polypropylene to expanded graphite prepared in Example 1. The thickness of the substrate was 0.5 mm, and the bulk density was 1g/cm³. Four substrates each of which was arranged in this way were prepared. No paint was applied to one substrate, whereas the paint used in Experiment 1 (Varniphite UCC-2 (made by Nippon Graphite Industries, ltd.)) was applied to the remaining three substrates. The amounts applied to the substrates were 0.002g/cm², 0.006g/cm², and 0.010g/cm², respectively.
(C) A substrate was formed by a method similar to the method in Example 1. The thickness of the substrate was 0.5 mm, and the bulk density was 1g/cm³. Four substrates were prepared. No paint was applied to one substrate, whereas the paint used in Experiment 1 (Varniphite UCC-2 (made by Nippon Graphite Industries, ltd.)) was applied to the remaining three substrates. The amounts applied to the substrates were 0.002g/cm², 0.006g/cm², and 0.010g/cm², respectively (see FIG. 4). An experiment in which the applied amount was 0.008g/cm² was additionally conducted (see FIG. 5).
(D) A substrate was prepared by a method identical with Example 1, except that 20 parts by weight of polypropylene was mixed with 100 parts by weight of the expanded graphite. The thickness of the substrate was 0.5 mm, and the bulk density was 1g/cm³. Four substrates were prepared. No paint was applied to one substrate, whereas the paint used in Experiment 1 (Varniphite UCC-2 (made by Nippon Graphite Industries, ltd.)) was applied to the remaining three substrates. The amounts applied to the substrates were 0.002g/cm², 0.006g/cm², and 0.010g/cm², respectively.
(E) A substrate was prepared by a method identical with Example 1, except that 25 parts by weight of polypropylene was mixed with 100 parts by weight of the expanded graphite. The thickness of the substrate was 0.5 mm, and the bulk density was 1g/cm³. Four substrates were prepared. No paint was applied to one substrate, whereas the paint used in Experiment 1 (Varniphite UCC-2 (made by Nippon Graphite Industries, ltd.)) was applied to the remaining three substrates. The amounts applied to the substrates were 0.002g/cm², 0.006g/cm², and 0.010g/cm², respectively.
(F) A substrate was prepared by a method identical with Example 1, except that 18 parts by weight of polypropylene was mixed with 100 parts by weight of the expanded graphite. The thickness of the substrate was 0.5 mm, and the bulk density was 1g/cm³. Four substrates were prepared. No paint was applied to one substrate, whereas the paint used in Experiment 1 (Varniphite UCC-2 (made by Nippon Graphite Industries, ltd.)) was applied to the remaining three substrates. The amounts applied to the substrates were 0.002g/cm², 0.006g/cm², and 0.010g/cm², respectively.

### [Experiment]

The surface resistivity of each of the composite or substrate formed in (A) to (F) was measured by a four-probe method using a four-probe measuring apparatus (K705RS made by Kyowa Riken Co., Ltd.). FIG. 4 shows the surface resistivity of the composite or substrate of each of (A) to (F), whereas FIG. 5 shows the surface resistivity of the composite of (C).

According to (B) to (F) in FIG. 4, the surface resistivities corresponding to the respective applied amounts exhibited similar tendency even if the amount of polypropylene was changed. Furthermore, according to the tendencies of (B) to (F) in FIG. 4 and the result of (C) in FIG. 5, the surface resistivity was more or less the same and no significant difference was observed when the applied amount was equal to or smaller than 0.008g/cm². Meanwhile, when the applied amount was 0.010g/cm², the surface resistivity was significantly high as compared to cases where the applied amount was equal to or smaller than 0.008g/cm². Based on these results, it was found that increase in surface resistivity on account of a conductive layer was prevented when the applied amount of the conductive layer (the amount of the conductive layer) was equal to or smaller than 0.008g/cm².

(A) and (B) are different in the bulk density of the substrate. However, when experiment results in which the applied amount was 0g/cm² were compared with each other, the surface resistivities were almost identical.

It is understood from FIG. 4 that, in (B) and (C) to (F) having the same bulk density of 1g/cm³ with (B), the surface resistivities corresponding to the respective applied amounts exhibit the same tendency.

It is therefore assumed that, in (A) in which the bulk density of the substrate is 2g/cm³, the surface resistivity with a conductive layer is almost identical with the surface resistivity in (B) in which the bulk density of the substrate is 1g/cm³.

Thus, the embodiment of the present invention is described hereinabove. However, the specific structure of the present invention shall not be interpreted as to be limited to the above described embodiment. Accordingly, the preferred embodiments of the present invention as set forth above are intended to be illustrative, not limiting. Various changes may be made without departing from the spirit and scope of the invention as defined in the following claims.

For example, while in the embodiment and Examples above a mixture of expanded graphite and polypropylene is molded into a predetermined shape and then the mixture is heated, the mixture may be heated before the molding.

### [Reference Signs List]

- 1: composite
- 2: substrate
- 3: conductive layer

## Claims

1. A composite in which a conductive layer is formed on a substrate which includes: a carbon material including a carbon component; and hydrophobic resin.

2. The composite according to claim 1, wherein, the hydrophobic resin is evenly spread in the substrate.

3. The composite according to claim 1 or 2, wherein, the carbon material is expanded graphite.

4. The composite according to any one of claims 1 to 3, wherein, the hydrophobic resin is polyolefin resin.

5. The composite according to claim 1 or 2, wherein, the carbon material is expanded graphite, and
the substrate includes 3 parts by weight or more and 25 parts by weight or less of the hydrophobic resin relative to 100 parts by weight of the expanded graphite.

6. A method for manufacturing a composite in which a conductive layer is formed on a substrate which includes : a carbon material including a carbon component; and hydrophobic resin, the method comprising the step of
forming the conductive layer on the substrate which is formed by thermally treating a molding formed by molding a mixture which includes: the carbon material including the carbon component; and the hydrophobic resin.
